# EUROPEAN PATENT APPLICATION

(11) **EP 4 843 799 A1**
(43) Date of publication of application: **25.11.2026**
(21) Application number: 26180073.4
(22) Date of filing: 20.05.2026
(51) Int. Cl.: B60G 17/018, B60G 17/08

(54) **IMPROVED METHOD FOR CONTROLLING THE SUSPENSION ASSEMBLY OF A WORK VEHICLE AND WORK VEHICLE IMPLEMENTING SUCH METHOD**

(30) Priority: 21.05.2025 IT 202500011527
(71) Applicant: CNH Industrial Italia S.p.A., 10156 Torino (IT)
(72) Inventor: Pane, Carlo, 10156 Turin (IT); Poggiali, Matteo, 10156 Turin (IT); Nasti, Raffaello, 10156 Turin (IT); Cossu, Gabriele, 10156 Turin (IT)
(74) Representative: CNH Industrial IP Department

(57) **Abstract**

A method for controlling a work vehicle (1), comprising: a body (2) movable on the ground by means of ground resting means (3), and a suspension system (15) connecting the ground resting means (3) to the body (2) in a movable manner. The suspension system (15) comprising: a connection element (16) carried by the body (2) in a movable manner and carrying the ground resting means (3), and at least one hydraulic actuator (20) interposed between the body (2) and the connection element (16), the work vehicle (1) further comprising a hydraulic system (30) provided with pumping means (32) fluidly connected to the hydraulic actuator (20) and adapted to provide pressurized hydraulic fluid to the hydraulic actuator (20), and valve means (38), which are fluidly interposed between the outlet of the pumping means (32) and the hydraulic actuator (20). The method comprising to adapt the stiffness and the damping of the suspension system (15) on the basis of the magnitude of the load applied to front axle (6) and to rear axle (7) and to the distribution of the load between front axle (6) and rear axle (7).

## Description

### TECHNICAL FIELD

The present disclosure relates to a method for controlling the suspension assembly of a work vehicle and to a work vehicle implementing such method.

Some example embodiments of the present disclosure may be applied in a method for controlling the independent front suspensions of a tractor. Reference will be made to this application by way of the various example embodiments described below, without however losing in generality.

### BACKGROUND

As is known, to improve tractor performances and driver's comfort, agricultural vehicles such as tractors have been equipped with front suspensions interposed between the front axle and the work vehicle chassis.

Front suspensions generally comprise a pair of hydraulically controlled shock absorbers interposed between the chassis of the work vehicle and the wheel hub or the front axle to absorb the impact loading during operation and control the roll and pitch of the work vehicle body.

In addition, front suspensions generally comprise a hydraulic control assembly configured to control the pressure of the hydraulic fluid provided to the shock absorbers, in order to control the stiffness, the damping and the position of the same suspension.

Suspension systems currently on the market may be provided with a plurality of different predetermined settings that allows the user to modify the response, in particular the stiffness of the suspension system on the basis of his preferences and/or on the job to be carried out by work vehicle.

Unfortunately, such suspension settings are pre-set by the work vehicle manufacturer, and they cannot adapt to different the different loading conditions and working environment experienced by the work vehicle during use.

Indeed, as it may be known in the art, the load on the axles of work vehicle may vary significantly depending on the kind of job to be executed by the work vehicle, and suspension systems settings are not able to adapt to the actual load carried by work vehicle.

In view of the above, the need is felt (or it may be beneficial) to provide an improved method for controlling a suspension system of a work vehicle and a related work vehicle able to overcome the aforementioned drawbacks.

The present disclosure is directed to overcome the above-mentioned drawbacks, in an optimized and cost-effective manner.

### SUMMARY

Some example embodiments relate to an improved method for controlling a suspension system of a work vehicle as claimed in the appended set of claims.

### BRIEF DESCRIPTION OF DRAWINGS

Some example embodiments of the present disclosure are hereunder described with reference to the accompanying drawings, in which:
- Figures 1 and 2 are two perspective and exploded view of a possible realization of a work vehicle, with parts removed for clarity;
- Figure 3 is a schematic representation of a hydraulic system of the work vehicle illustrated in Figures 1 and 2, with parts removed for clarity; and
- Figure 4 is a flow chart of a control method realized according to some example embodiments.

### DETAILED DESCRIPTION=

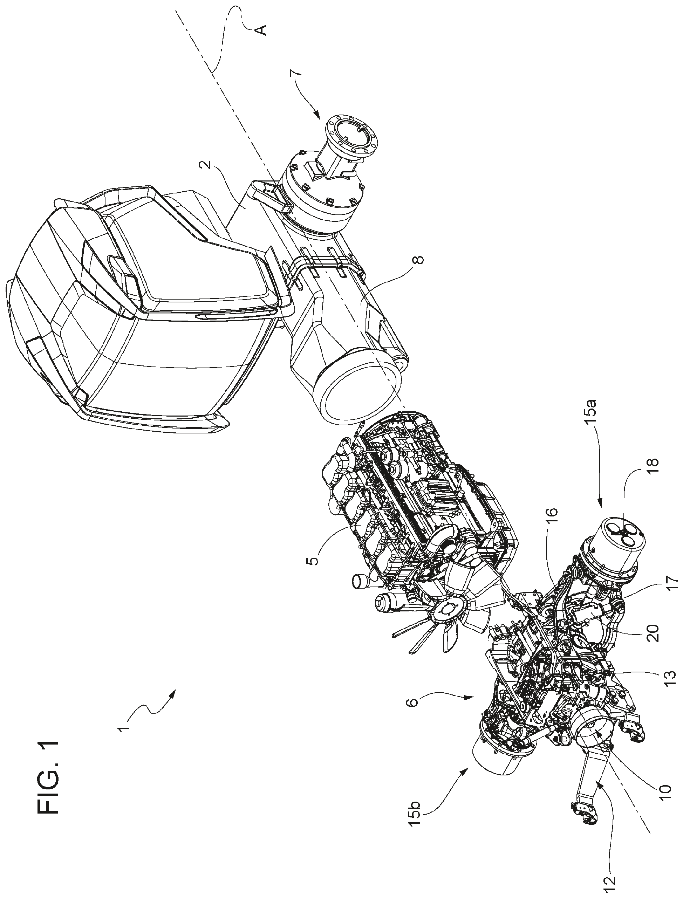

With reference to Figure 1, number 1 schematically denotes, as a whole, a work vehicle 1, in particular, an agricultural vehicle such as a tractor, but example embodiments are not limited thereto. For example, work vehicle 1 may be any other work and/or agricultural vehicle.

Work vehicle 1 comprises a body or chassis 2 (only partially illustrated in Figure 1), which extends along a reference axis A and is movable on the ground by means of ground resting means (not illustrated), such as wheels and/or tracks.

In addition, work vehicle 1 may comprise an internal combustion engine 5, which is carried by body 2 and is configured to provide torque to said ground resting means (e.g., to the wheels and/or tracks) to allow motion of the work vehicle body 2 on the ground.

Work vehicle 1 is further provided with a front axle assembly 6 and a rear axle assembly 7 carrying respective ground resting means.

In addition, work vehicle 1 comprises a drivetrain assembly 8 operatively interposed between the internal combustion engine and at least a pair of said resting engaging means and is adapted to transmit to these latter (e.g., to the wheels and/or tracks) the torque provided by internal combustion engine 5, in a manner per se known and therefore not further described.

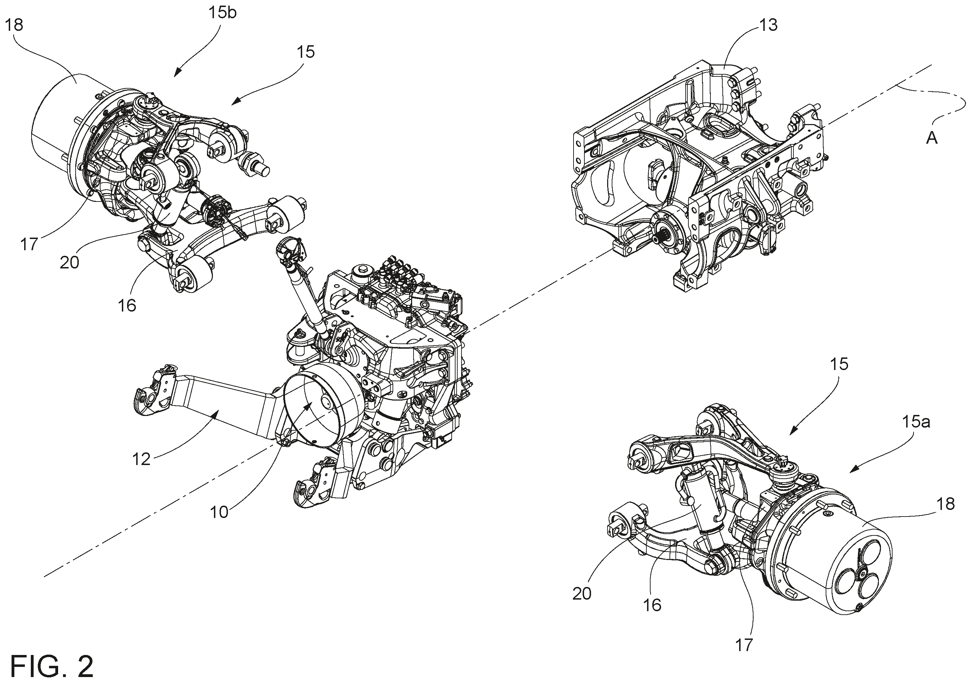

With reference to the example illustrated in Figures 1 and 2, work vehicle 1 may further comprise a front power take off 10 and/or a front hitch assembly 12, also known as Front Hitch Power Lift.

In addition, work vehicle 1 may further comprise a rear hitch assembly (not illustrated), in a manner per se known and therefore not further described.

Referring to the accompanying figures, the front axle assembly 6 preferably comprises a housing 13, which may be configured to be fixed to the housing of internal combustion engine 5 and is adapted to house mechanical transmission components, as per se known and therefore not further described.

Similarly, rear axle assembly 7 preferably comprises a housing 14, which may be configured to be fixed to the housing of drivetrain assembly 8 and is adapted to house mechanical transmission components, as per se known and therefore not further described.

Furthermore, work vehicle 1 comprises a suspension system 15 that connects the ground resting means to the body 2 of work vehicle 1 in a movable manner.

For example, work vehicle 1 may comprise a suspended front axle, and suspension system 15 may be interposed between the suspended front axle and body 2.

Alternatively, with reference to the exemplary embodiment illustrated in Figure 1 and 2, work vehicle may comprise a front independent front suspension system interposed between the suspended front axle and body 2.

More in detail, suspension system 15 may comprises one or more connection element 16 carried by body 2 in a movable manner and carrying a corresponding ground resting means 3.

For example, such connection elements 16 may comprise suspended front axle or the connecting arms (wishbones) interposed between the body and the ground resting means.

In other words, suspension system 15 may comprise two separate and distinct suspensions 15a and 15b, each of which connects a respective wheel hub 17 to the body 2 of work vehicle 1.

In the illustrated example, each suspension 15a or 15b may comprise a double-wishbone suspension.

In addition, work vehicle 1 preferably comprises a knuckle 17 carried by the suspension system 15.

In addition, work vehicle 1 preferably comprises a wheel hub 18 carrying the ground resting means and carried in a rotatable manner by the suspension system 15, in particular, by the knuckle 17, if present.

In some example embodiments, suspension system 15 comprises a pair of hydraulic cylinders 20 or shock absorbers, each operatively interposed between the body 2 and the corresponding connection element 16 of suspension system 15.

For instance, hydraulic cylinders 20 may comprise double effect hydraulic cylinders.

With reference to the example illustrated in Figure 2, a first end of hydraulic cylinders 20 may be pivotally connected to body 2 and a second end of hydraulic cylinders 20 opposite to the first end may be pivotally connected to the corresponding connection element 16

In addition, work vehicle 1 preferably comprises a hydraulic system 30 configured to provide pressurized hydraulic fluid towards shock absorber 20.

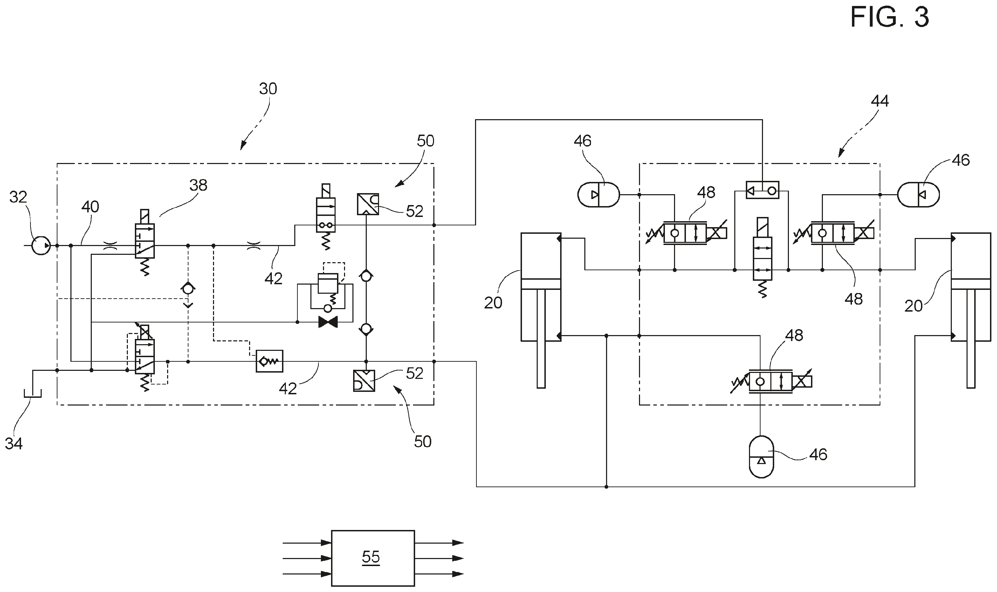

With reference to the embodiment illustrated in Figure 3, hydraulic system 30 comprises pumping means 32, which may be driven in rotation by internal combustion engine 5, and are adapted to suck hydraulic fluid from a tank 34 and to provide pressurized hydraulic fluid towards the cylinders 20. Preferably, pumping means 32 comprise a hydraulic pump.

In addition, hydraulic system 30 preferably comprises a valve assembly 38, which is operatively interposed between the outlet of pumping means 32, tank 34 and the hydraulic cylinders 20, and is adapted to control the flow of pressurized hydraulic fluid to and from hydraulic cylinders 20, in order to control the operation of suspension system 15, in a manner per se known and therefore not described in detail.

In particular, valve assembly 38 is fluidly connected to the outlet of pumping means 32 via a supply line 40, and to the hydraulic cylinders 20 with respective hydraulic lines 42.

In some example embodiments, valve assembly 38 preferably comprises solenoid-controlled valve or electro-valve.

Preferably, hydraulic system 30 may comprise a damping system 44 fluidly connected to hydraulic cylinders 20 and configured to control the damping provided by the same hydraulic cylinders 20.

Damping system 44 may comprise one or more hydraulic accumulator 46 and one or more damping valve 48 fluidly interposed between the corresponding hydraulic cylinder 20 and the corresponding hydraulic accumulator 44.

In addition, hydraulic arrangement 30 may comprise sensor means 50 configured to measure the pressure of the hydraulic fluid provided to the hydraulic actuator 26, downstream valve means 38 and/or to measure the position of the hydraulic actuator 26.

For example, sensor means 50 may comprise one or more pressure sensors 52 fluidly connected to a corresponding hydraulic line 42 and configured to measure the pressure of the hydraulic fluid within the same hydraulic line 42.

In addition or alternative, sensor means 44 may comprise position sensors (not illustrated) coupled to hydraulic actuators 20 and configured to determine the stroke/position of the same hydraulic actuators 20.

Furthermore, sensor means 44 may further comprise a sensor carried by the rear hitch assembly and configured to measure data related to the load applied on the same rear hitch assembly.

For example, sensor means 44 may comprise a pressure sensor coupled to the draft pin of the rear hitch assembly.

With reference to the exemplary embodiment illustrated in Figure 2, work vehicle 1 further comprises an electronic control unit 55, which is connected at least to hydraulic system 30 and to sensor means 50, and is provided with elaboration means configured to control their operation according to the control method described more in detail in the following.

Such control method, for instance, may be deployed into a specific computer program, which can be downloaded into the electronic control unit 55 and is configured to be executed by such electronic control unit 55.

More in detail, electronic control unit 55 may comprise processing means and storage means. Storage means may include computer-readable means having stored thereon which include instructions which, when executed by the processing means, causes the same processing means to carry out the control method as described in the following.

In particular, electronic control unit 55 may be configured to control operation of pumping means 32 and/or valve means 38 according to control algorithms stored within the same electronic control unit 55 and/or according to control commands imparted by a user of the work vehicle 1 through command input means.

For instance, electronic control unit 55 may be configured to control pumping means 32 and/or valve means 38 in order to increase or decrease the pressure of the hydraulic fluid within hydraulic cylinders 20, to modify accordingly the stiffness of suspension system 15.

In addition or alternative, electronic control unit 55 may be configured to control the operation of damping system 44, in particular, of damping valves 48, in order to control the damping provided by suspension system 15.

In some example embodiments, electronic control unit 55 is configured to control the operation of suspension system 15, in particular, of pumping means 32, of valve means 38 and/or of damping system 44, on the basis of the data provided by sensor means 50.

More in detail, electronic control unit 55 is preferably configured to control the operation of suspension system 15 on the basis of the data provided by sensor means 50 preferably substantially in real time.

In addition, electronic control unit 55 may be configured to determine the actual load applied on front axle 6 and/or on rear axle 7 on the basis of the data provided by sensor means 50.

More in detail, electronic control unit 55 may be configured to determine the actual load applied on front axle 6 and/or on rear axle 7 on the basis of the data provided respectively by pressure sensors 52 and the pressure sensor carried by the rear hitch assembly, preferably by the draft pin of the rear hitch assembly.

Indeed, the load applied on the front axle 6 and on the rear axle 7 of work vehicle may vary depending on the work implements, ballasts or similar tools towed or carried by work vehicle 1.

In greater detail, electronic control unit 55 may be configured to determine the distribution of the load between the front axle 6 and the rear axle 7 on the basis of the data provided by sensor means 50.

According to some example embodiments, electronic control unit 55 is further configured to modify the behaviour, in particular the stiffness and/or the damping, of suspension system 15 on the basis of the load applied on front axle 6 and/or rear axle 7.

More in detail, electronic control unit 55 may be configured to modify the behaviour, in particular, the stiffness and/or the damping, of suspension system 15 on the basis of the distribution of the load between front axle 6 and rear axle 7.

Preferably, electronic control unit 55 is configured to determine a parameter/index, in the following referred to as "Inertia Depended Index" or "IDI", indicative of the magnitude of the load applied to front axle 6 and rear axle 7 and the distribution of the load between front axle 6 and rear axle 7.

In greater detail, electronic control unit 55 is preferably configured to determine such Inertia Depended Index on the basis of the data provided by sensor means 50.

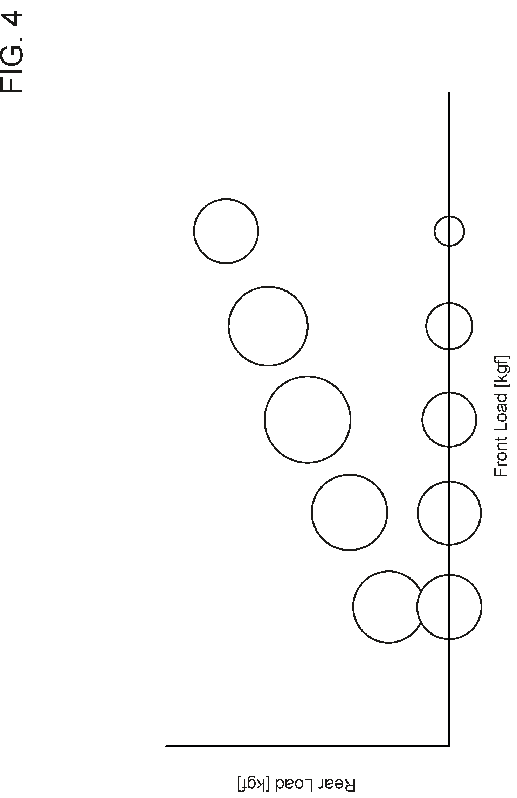

For example, Figure 4 is a graphical representation of such "Inertia Depended Index" added for illustrative purposes, in which the position of the circle is indicative of the distribution of the load between the front axle 6 and the rear axle 7, and the diameter/size of the circle represents the magnitude of the load applied to the front axle 6 and to the rear axle 7.

Preferably, the "Inertia Depended Index" may comprise a coefficient indicative of the magnitude of the load carried by work vehicle 1 and of the distribution of the load between front axle 6 and rear axle 7.

In addition, electronic control unit 55 is preferably configured to determine the stiffness and damping parameters of the suspension system 15 on the basis of such "Inertia Depended Index", in order to take into account also the actual loading conditions of work vehicle 1.

In other words, such "Inertia Depended Index" is preferably determined on the basis of the load applied respectively on the front axle 6 and on the rear axle 7.

More in detail, electronic control unit 55 is preferably configured to determine the control parameters of pumping means 32, valve means 38 and/or damping system 44 which in turn control the stiffness and damping parameters of the suspension system 15 on the basis of such "Inertia Depended Index".

Preferably, electronic control unit 55 is configured to store a table and/or a list (or at least one of a table or a list) including one or more pre-set parameters for the stiffness and damping characteristics of suspension system 15. Such pre-set parameters may be determined/calibrated by the manufacturer.

For example, electronic control unit 55 may be configured to store three predetermined sets of pre-set parameters for the stiffness and damping characteristics of suspension system 15, namely a "hard" setting, a "medium" setting and a "soft" setting.

In addition, electronic control unit 55 may be configured to interpolate the predetermined sets of pre-set calibration parameters on the basis of the value of the aforementioned "Inertia Depended Index", in order to adapt the stiffness and the damping of the suspension system 15 to the actual load conditions of work vehicle 1. Preferably, electronic control unit 55 is configured to interpolate the predetermined sets of said pre-set calibration parameters substantially in real time, during work vehicle 1 operation.

In some example embodiments, the operation of the above-described work machine 1 is the following.

In use, electronic control unit 55 determines the actual load applied respectively on the front axle 6 and on the rear axle 7 of the work vehicle on the basis of the data provided by sensing means 50.

In addition, electronic determines the distribution of the loads applied on front axle 6 and on rear axle 7 on the basis of the data provided by sensing means 50.

Then, electronic control unit 55 determines the "Inertia Depended Index" and controls the stiffness and the damping parameters of the suspension system 15 on the basis of the "Inertia Depended Index".

Preferably, the control of the stiffness and the damping parameters of the suspension system 15 on the basis of the "Inertia Depended Index" comprises to interpolate the pre-set calibration parameters of the suspension system 15.

Preferably, the aforementioned steps occur in substantially real time during work vehicle 1 operation.

In view of the above, according to the disclosed embodiment, the present disclosure is directed to a method for controlling a work vehicle 1 as described above.

The method comprises the following steps:
a) determining magnitude of the load applied on front axle 6 and on the rear axle 7 and determining the distribution of the load between front axle 6 and rear axle 7, and
b) modifying (or controlling or adapting) the stiffness and damping of suspension system 15 on the basis of the magnitude and distribution of the load determined in step a).

Preferably, step a) comprises the step of determining the magnitude of the load applied on front axle 6 and on the rear axle 7 and determining the distribution of the load between front axle 6 and rear axle 7 on the basis of the data provided by sensor means 50.

In addition, step b) preferably comprises the step of determining the "Inertia Depended Index".

Moreover, step b) preferably comprises the step of interpolate the pre-set calibration parameters of suspension system in order to modify/adapt the stiffness and damping parameters on the basis of the Inertia Depended Index, preferably substantially in real time.

More in detail, the step of controlling the damping of suspension system 15 may comprise the step of controlling the operation of damping assembly 44, in particular, of damping valve 48, in order to control the flowrate of the hydraulic fluid flowing from hydraulic cylinders 20 within the corresponding hydraulic accumulators 46.

In addition, the step of controlling the stiffness of suspension system 15 may comprise the step of controlling pumping means 32 and/or valve means 38, in order to control the pressure of the hydraulic fluid provided to hydraulic cylinders 20.

Preferably, the aforementioned method is carried out in real time during work vehicle 1 operation.

In addition, the aforementioned steps may not be strictly performed in the order of mentioning. Indeed, step a) and b) may also be performed in reversed order.

In view of the foregoing, the advantages of the method and the related work vehicle according to the present disclosure are apparent.

In particular, by determining the magnitude and the distribution of the load between the front and rear axle of the work vehicle, it is possible to adapt precisely the suspension behaviour (damping and stiffness) to the actual load conditions of work vehicle, with the obvious advantages that this entails.

In particular, thanks to the proposed method it is possible to improve the stability and the drivability of work vehicle, as the suspension behaviour may adapt also to uneven distribution of the load of work vehicle.

In addition, thanks to the proposed method it is possible to improve the performances of the work vehicle and the comfort for the driver, as it is possible to better control the pitch movement and the dampening of bumps on the road for any loading condition of work vehicle.

It is clear that modifications can be made to the described work vehicle and to its control method, which do not extend beyond the scope of protection defined by the claims.

Indeed, suspension system 15 may not comprise two independent suspension and may comprise a suspended axle interconnecting the two knuckles 16 and/or wheel hubs 17 and carried in a movable manner by body 2. Suspension system 15, in particular, the two hydraulic cylinders 26 or shock absorber may be operatively interposed between the body 2 and the suspended axle.

In addition, suspension system 15 and the related hydraulic system 30 may comprise additional components and/or be provided with a different configuration.

## Claims

1. A method for controlling a work vehicle (1), the method comprising:
a) determining a magnitude of a load applied on a front axle (6) and on a rear axle (7),
b) determining a distribution of the load between said front axle (6) and said rear axle (7), and
c) adapting stiffness and damping of a suspension system (15) on the basis of the magnitude of the load determined in said step a) and on the basis of the distribution of the load determined in said step b),
wherein the work vehicle (1) includes:
a body (2) movable on the ground by means of ground resting means (3);
the front axle (6) and the rear axle (7) interposed between said body (2) and said ground resting means in a movable manner, and
the suspension system (15) interposed between said body and at least one between said front axle (6) and said rear axle (7),
wherein said suspension system (15) includes:
a connection element (16) interposed between said body (2) and the at least one between said front axle (6) and said rear axle (7) in a movable manner, and
at least one hydraulic actuator (20) interposed between said body (2) and said connection element (16),
wherein said work vehicle (1) further comprises a hydraulic system (30) provided with pumping means (32) fluidly connected to said hydraulic actuator (20) and adapted to provide pressurized hydraulic fluid to said hydraulic actuator (20), and valve means (38), which are fluidly interposed between an outlet of said pumping means (32) and said hydraulic actuator (20).

2. The method according to claim 1, wherein said step c) further comprises:
determining an index representative of the magnitude of the load determined in said step a) and the distribution of the load determined in said step b).

3. The method according to claim 2, wherein said work vehicle further comprises:
an electronic control unit (55) storing a table and/or a list including one or more pre-set calibration parameters of said suspension system (15), wherein said pre-set calibration parameters are related to different and pre-set values of stiffness and damping of the suspension system (15),
wherein the method further comprises:
interpolating the one or more pre-set calibration parameters of said suspension system (15) on the basis of said index, in order to adapt an operation of the suspension system (15) to an actual loading condition of the work vehicle (1).

4. The method according to any of the preceding claims, wherein said work vehicle (1) further comprises a rear hitch assembly, and
wherein said step a) and said step b) comprises respectively to determine the magnitude of the load applied on said front axle (6) and on said rear axle (7) and the distribution of the load between said front axle (6) and said rear axle (7) on the basis of the data provided by one or more pressure sensors connected to said hydraulic system (30) and a load sensor carried by the rear hitch assembly.

5. The method according to any of the preceding claims, wherein the step of controlling the stiffness of the suspension system (15) comprises to control an operation of pumping means (32) and/or valve means (38).

6. The method according to any of the preceding claims, wherein said suspension system (15) comprises a damping system (44) provided with one or more hydraulic accumulators (46) fluidly connected to corresponding hydraulic actuators (20) and one or more damping valves (48) fluidly interposed between hydraulic accumulators (46) and hydraulic actuators (20), and
wherein the step of controlling the damping of the suspension system (15) comprises to control the operation of at least damping valves (48).

7. The method according to any of the preceding claims, wherein said connection element (16) comprises a suspended front axle or one or more independent front suspension arm.

8. A work vehicle (1) comprising:
a body (2) movable on the ground by means of ground resting means (3);
a front axle (6) and a rear axle (7) interposed between said body (2) and said ground resting means in a movable manner,
a suspension system (15) interposed between said body and at least one between said front axle (6) and said rear axle (7),
wherein said suspension system (15) includes:
a connection element (16) interposed between said body (2) and the at least one between said front axle (6) and said rear axle (7) in a movable manner, and
at least one hydraulic actuator (20) interposed between said body (2) and said connection element (16),
wherein said work vehicle (1) comprises a hydraulic system (30) provided with pumping means (32) fluidly connected to said hydraulic actuator (20) and adapted to provide pressurized hydraulic fluid to said hydraulic actuator (20), and valve means (38), which are fluidly interposed between an outlet of said pumping means (32) and said hydraulic actuator (20), and
wherein said work vehicle (1) further comprises an electronic control unit (55) operatively connected to said suspension system (15) and to said hydraulic system (30), the electronic control unit (55) including elaboration means configured to execute the method according to any of the preceding claims.

9. A computer program comprising instructions which, when executed by the electronic control unit (55) of the work vehicle (1) of claim 8, cause said electronic control unit (55) to carry out the method of claims 1 to 7.

10. A computer-readable means having stored thereon the instructions of the computer program of claim 9.
